# EUROPÄISCHE PATENTSCHRIFT

(11) **EP 1 638 828 B1**
(45) Veröffentlichungstag und Bekanntmachung des Hinweises auf die Patenterteilung: **22.08.2007**
(21) Anmeldenummer: 04741585.6
(22) Anmeldetag: 18.05.2004
(51) Int. Cl.: B60T 8/36

(54) **HYDRAULIKAGGREGAT**
HYDRAULIC UNIT
UNITE HYDRAULIQUE

(30) Priorität: 14.06.2003 DE 10326851; 29.11.2003 DE 10355910
(43) Veröffentlichungstag der Anmeldung: 29.03.2006
(73) Patentinhaber: Continental Teves AG & Co. oHG, 60488 Frankfurt (DE)
(72) Erfinder: BECK, Heinz, 97877 Wertheim-Nassig (DE); DINKEL, Dieter, 65824 Schwalbach (DE)
(86) Internationale Anmeldenummer: PCT/EP2004/050830
(87) Internationale Veröffentlichungsnummer: WO 2004/110838

(56) Entgegenhaltungen:
- WO-A-01/00471
- WO-A-91/16220
- WO-A-97/12790
- WO-A-97/13067
- WO-A-97/18113
- PATENT ABSTRACTS OF JAPAN vol. 1996, no. 11, 29. November 1996 (1996-11-29) -& JP 08 188137 A (UNISIA JECS CORP), 23. Juli 1996 (1996-07-23)

## Beschreibung

Die Erfindung betrifft ein Hydraulikaggregat für eine schlupfgeregelte Bremsanlage, nach dem Oberbegriff des Patentanspruchs 1.

Ein Hydraulikaggregat ist bereits aus der WO 91/16220 bekannt. Darin wird vorgeschlagen, die Geräuschdämpfungskammern parallel zu den Niederdruckspeicherbohrungen anzuordnen, die somit gemeinsam in einer Reihe seitlich zu einer Pumpenbohrung ausgerichtet sind. Die Druckmittelkanäle für die Bremsdruckgeberanschlüsse am blockförmigen Aufnahmekörper durchqueren die für die Einlaßventile vorgesehenen Ventilaufnahmebohrungen vertikal und verlaufen seitlich an der Pumpenbohrung vorbei in den Bodenbereich der Geräuschdämpfungskammern. Parallel zu jedem in die Geräuschdämpfungskammer einmündenden Druckmittelkanal verläuft für jeden Bremskreis ein weiterer, vertikaler Druckmittelkanal, der ausschließlich die Pumpenbohrung mit der Geräuschdämpfungskammer verbindet.

Dies führt zwangsläufig zu einer aufwendigen Bauweise, um die notwendigen Geräuschdämpfungskammern und die Niederdruckspeicherbohrungen realisieren zu können. Andererseits muß ein erhebliches Zerspanungsvolumen mittels einer Vielzahl unterschiedlicher Bohroperationen aus verschiedenen Richtungen am Block abgetragen werden. Folglich bedarf es aufwendiger Maßnahmen, insbesondere zur Herstellung der Geräuschdämpfungskammern und der erforderlichen Druckmittelkanäle. Ferner wird durch die gewählte Aufteilung der Ventilreihen eine Aufteilung der Radbremsanschlüsse auf beide Seitenflächen des blockförmigen Aufnahmekörper erforderlich, so daß sich ein auf drei Seitenflächen des Aufnahmekörpers verteiltes Anschlußbild für das Rohrleitungssystem (Bremsleitungen) ergibt. Dies erfordert wiederum einen erhöhten Platzbedarf und die notwendigen Montageschritte nehmen zu.

Aus WO 01/00471 A ist ein Hydraulikaggregat der gattungsbildenden Art mit zwei Geräuschdämpfungskammern bekannt, die koaxial zur Pumpenbohrung zwischen der Pumpenbohrung und den diametralen Außenwänden des Aufnahmekörpers angeordnet sind. Ferner weist das Hydraulikaggregat zur Kontaktierung eines Elektromotors mit einem am Aufnahmekörper angeordneten Ventilsteuergerät, das die Steuerelektronik zum Antrieb des Elektromotors beinhaltet, zwischen den Ventilaufnahmebohrungen eine Durchgangsbohrung für einen elektrischen Stecker auf.

Ferner ist aus WO 97/18113 A ein Hydraulikaggregat mit zwei achsparallel zur Pumpenbohrung angeordnete Geräuschdämpfungskammern bekannt, wovon jede der beiden Geräuschdämpfungskammern über einen ersten Kanalabschnitt mit einem Bremsdruckgeberanschluss sowie über einen zweiten Kanalabschnitt mit der Pumpenbohrung verbunden ist, wobei die beiden Kanalabschnitte zueinander versetzt sind.

Daher ist es die Aufgabe der Erfindung, ein Hydraulikaggregat der angegebenen Art möglichst kleinbauend und kostengünstig herzustellen.

Insbesondere der Herstellaufwand zum Anschluß der Geräuschdämpfungskammern an die Bremsdruckgeberanschlüsse soll vereinfacht werden, wobei auch die hydraulische Verbindungen der Pumpenbohrung mit den Geräuschdämpfungskammern sowie die Verbindung der Niederdruckspeicherbohrungen über die Pumpenbohrung zu den Geräuschdämpfungskammern möglichst einfach realisiert werden sollen.

Diese Aufgabe wird für ein Hydraulikaggregat der angegebenen Art mit den kennzeichnenden Merkmalen des Anspruchs 1 gelöst.

Weitere Merkmale, Vorteile und Anwendungsmöglichkeiten der Erfindung gehen aus den Unteransprüchen hervor und werden im nachfolgenden anhand der Beschreibung mehrerer Ausführungsbeispiele erläutert.

Es zeigen:
- Figur 1: eine erste Perspektivdarstellung des blockförmigen Hydraulikaggregats mit einer Draufsicht auf die mit der Motoraufnahmebohrung versehenen Blockoberseite,
- Figur 2: eine zweite Perspektivdarstellung des blockförmigen Hydraulikaggregats mit einer Draufsicht auf die Blockunterseite, in welche die Ventilaufnahmebohrungen einmünden,
- Figur 3: eine teilweise Darstellung der in Figur 1 gezeigten Blockverbohrung im Bereich der die Einlassventile aufnehmenden ersten Ventilreihe in hydraulischer Anbindung an die Geräuschdämpfungskammern und die Pumpenbohrung,
- Figur 4: ausgehend von Figur 3 einen Querschnitt durch das Hydraulikaggregat,
- Figur 5: in einer Perspektivansicht auf die Oberseite des Hydraulikaggregats, auf die beiden Ventilreihen mit den Ventilaufnahmebohrungen, die Radbremsanschlüsse und die an den Ventilreihen angeschlossenen Druckmittelkanäle,
- Figur 6: ausgehend von Figur 5 die von der zweiten Ventilreihe zu den Niederdruckspeicherbohrungen führenden Druckmittelkanäle.

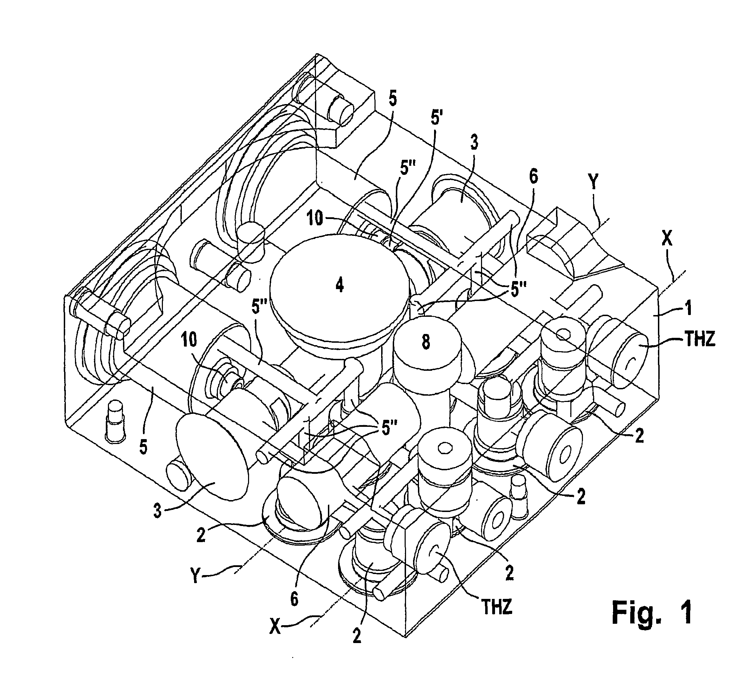

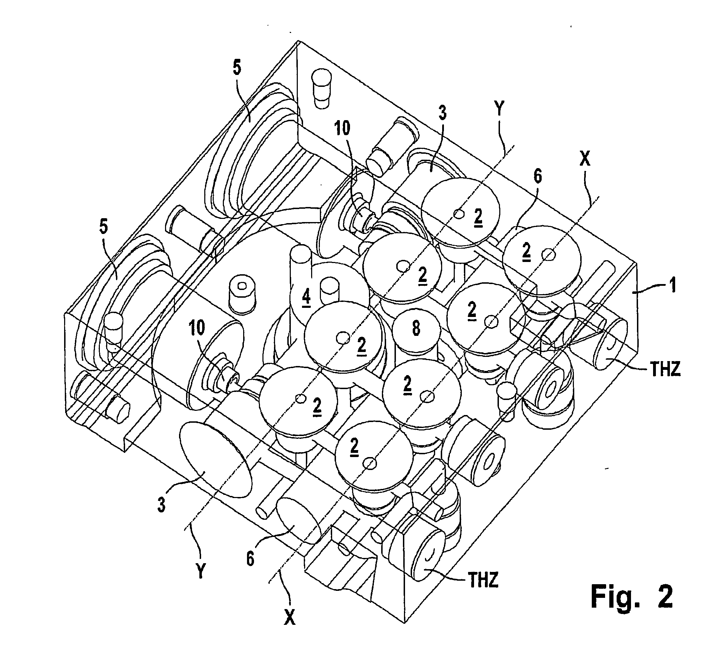

Die Figuren 1 und 2 zeigen jeweils mit Blick auf die Ober- bzw. Unterseite ein Hydraulikaggregat für eine schlupfgeregelte Bremsanlage, mit einem blockförmigen Aufnahmekörper 1, der in mehreren Ventilaufnahmebohrungen 2 einer ersten und zweiten Ventilreihe X, Y Ein- und Auslaßventile aufnimmt. Außerhalb zu den beiden Ventilreihen X, Y weist der Aufnahmekörper 1 eine Pumpenbohrung 3 auf, die quer zur Einmündungsrichtung der Ventilaufnahmebohrungen 2 in den Aufnahmekörper 1 gerichtet ist. Die zweite Ventilreihe Y ist unmittelbar neben der Pumpenbohrung 3 angeordnet, während die erste Ventilreihe X entfernt von der Pumpenbohrung 3 unmittelbar neben den in die Seitenfläche des Aufnahmekörpers 1 einmündenden Bremsdruckgeberanschlüssen THZ angeordnet ist, die somit entgegengesetzt zu der die Niederdruckspeicherbohrungen 5 aufweisenden Stirnfläche in eine weitere Stirnfläche einmünden. Außerhalb zu den beiden Ventilreihen X, Y ist in Figur 1 eine Motoraufnahmebohrung 4 zu erkennen, die senkrecht auf halber Pumpenbohrungslänge in die Pumpenbohrung 3 einmündet. Die Pumpenbohrung 3 trennt die beiden Ventilreihen X, Y im Aufnahmekörper 1 von den Niederdruckspeicherbohrungen 5, die senkrecht zu den Symmetrieachsen der Ventilaufnahmebohrungen 2 und senkrecht zu der Längsachse der Pumpenbohrung 3 in den Aufnahmekörper 1 gerichtet sind. Mehrere die Ventilaufnahmebohrungen 2, Pumpen- und Niederdruckspeicherbohrungen 3, 5 verbindende Druckmittelkanäle 2', 3', 5' sorgen für eine hydraulische Verbindung zwischen zwei in dem Aufnahmekörper 1 eingefügte Bremsdruckgeberanschlüsse THZ und den vier Radbremsanschlüssen HR, HL, VR, VL.

Ferner sind neben der Pumpenbohrung 3 zwei hohlzylinderförmige Geräuschdämpfungskammern 6 vorgesehen, die unmittelbar über die quer zur Pumpenachse verlaufenden Druckmittelkanäle 3' mit den zwei in den Aufnahmekörper 1 einmündenden Bremsdruckgeberanschlüssen THZ verbunden sind. Zwischen jeder Niederdruckspeicherbohrung 5 und der Pumpenbohrung 3 ist ein rechtwinklig in die Pumpenbohrung 3 einmündender Pumpensaugkanal 5' vorgesehen, der vorzugsweise durch Umfangsfräsen innerhalb der Pumpenbohrung hergestellt ist.

Die dem Motorengehäuse gegenüberliegenden Unterseite des Aufnahmekörpers (siehe Fig. 2) nimmt ein Ventilsteuergerät auf, das gleichzeitig die Steuerelektronik zum Antrieb eines im Motorengehäuse integrierten Elektromotors für die in der Pumpenbohrung 3 eingesetzte Radialkolbenpumpe beinhaltet, wobei ein elektrischer Stecker des Elektromotors durch eine zwischen den beiden Ventilreihe X, Y und den beiden Geräuschdämpfungskammern 6 gelegene Durchgangsbohrung 8 ragt, um die elektrische Kontaktierung des Elektromotors mit dem (das den Aufnahmekörper 1 kappenförmig abdeckenden) Ventilsteuergerät auf kürzestem Weg zu ermöglichen.

Erfindungsgemäß sind die beiden Geräuschdämpfungskammern 6 achsparallel zur Pumpenbohrung 3, und zwar gemäß Figur 1 oberhalb den beiden Ventilreihen X, Y und damit auf der Höhe der Bremsdruckgeberanschlüsse THZ angeordnet, wobei sich jeweils der als Sackbohrung ausgeführte Druckmittelkanal 3' von jeweils einem quer zu den Ventilaufnahmebohrungen 2 in die Seitenfläche des Aufnahmekörpers 1 einmündender Bremsdruckgeberanschluß THZ durch jeweils eine der beiden Geräuschdämpfungskammern 6 herstelltechnisch besonders einfach bis in die Pumpenbohrung 3 erstreckt.

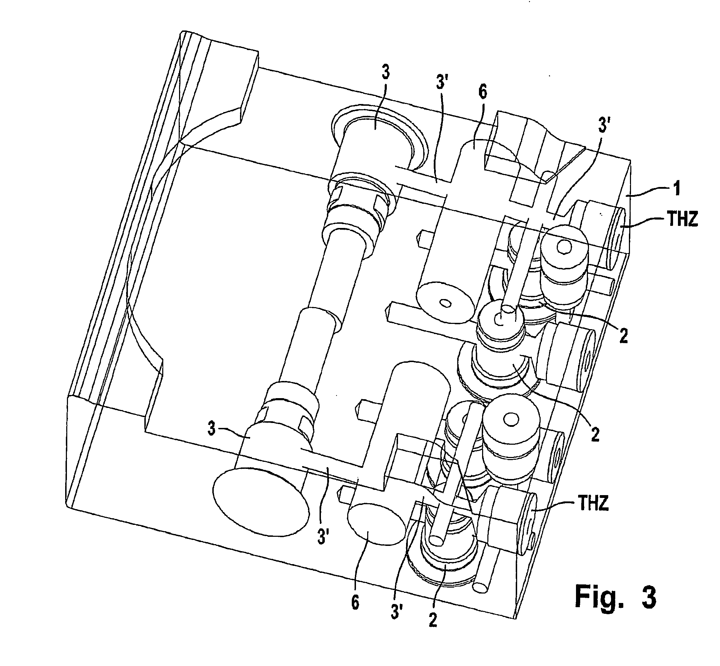

Die Figur 3 verdeutlicht die zuvor erläuterten erfindungswesentlichen Merkmale anhand einer Perspektivdarstellung eines Teilbereichs des Aufnahmekörpers 1, so daß die kurzen, leicht herzustellenden beiden Druckmittelkanäle 3' zwischen der Pumpenbohrung 3, den Geräuschdämpfungskammern, den Bremsdruckgeberanschlüssen THZ und den Ventilaufnahmebohrungen 2 der ersten Ventilreihe X gut zu erkennen sind.

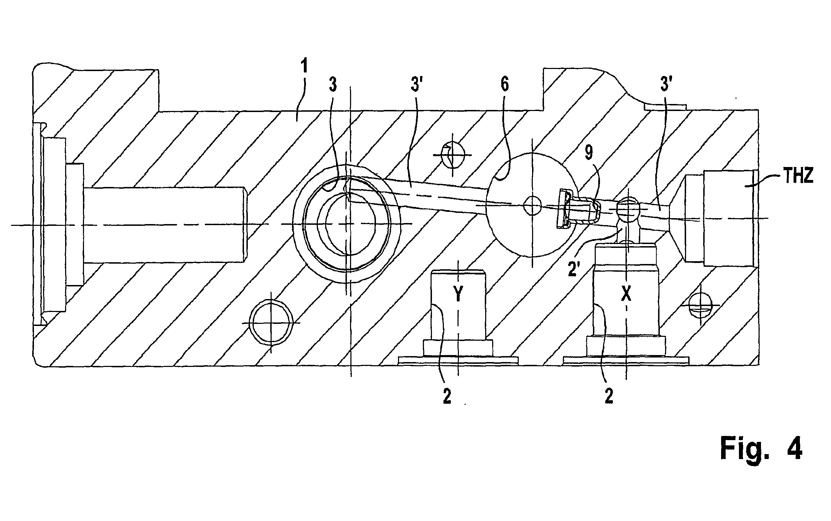

Die Figur 4 zeigt eine Schnittdarstellung des Aufnahmekörpers 1, aus der die aus Figur 3 bereits gesondert hervorgehobene erfindungswesentliche Verbohrung des blockförmigen Aufnahmekörpers 1 als Querschnitt durch einen der beiden Druckmittelkanäle 3' ersichtlich ist. Zu erkennen ist ferner, daß quer zur Sackbohrung jeweils ein von der Ventilaufnahmebohrung 2, die das Einlassventil aufnimmt, kommender Druckmittelkanal 2' besonders kurzbauend in den Druckmittelkanal 3' einmündet, wodurch das Zerspanungsvolumen möglichst gering gehalten wird. In jede Sackbohrung des Druckmittelkanal 3' ist vorteilhaft zum Zwecke der Geräuschdämpfung für jeden Bremskreis eine Blende 9 eingesetzt, die als Hülsenteil zwischen der Geräuschdämpfungskammer 6 und der Einmündungsstelle des mit der Ventilaufnahmebohrung 2 verbundenen Druckmittelkanals 2' in die Sackbohrung eingepreßt ist. Der Durchmesser der Geräuschdämpfungskammer 6 ist zweckmäßigerweise derart groß gewählt ist, daß die Blende 9 durch die Geräuschdämpfungskammer 6 hindurch in die Sackbohrung eingeführt werden kann, wodurch der Herstellaufwand zur Anordnung der Blende 9 minimal ist.

Wie aus den Figuren 3 und 4 gut zu erkennen ist, weist die Pumpenbohrung 3 zur Minimierung des Verschleißes beiderseits der Motoraufnahmebohrung 4 einen Achsenversatz zur Deachsierung zweier Pumpkolben einer zweikreisigen Radialkolbenpumpe auf.

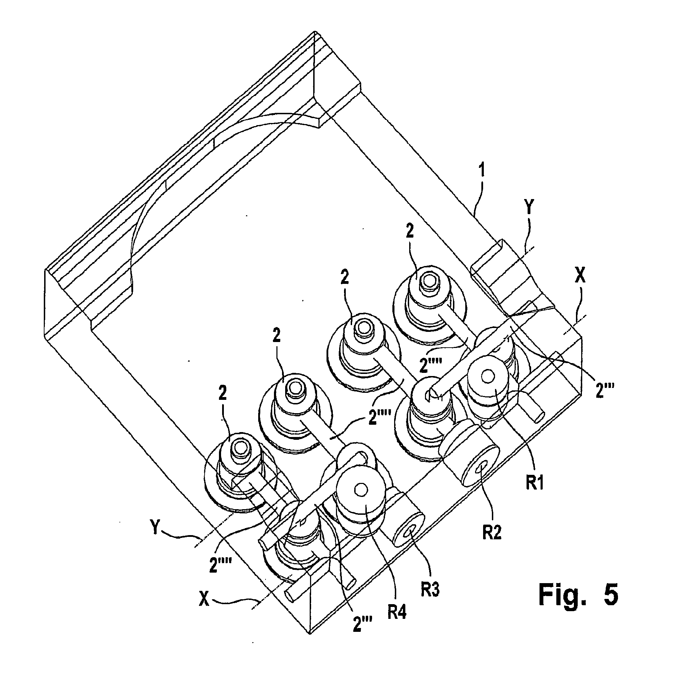

Die Figur 5 zeigt abweichend von den vorangegangenen Figuren lediglich die beiden Ventilreihen X, Y und die zugehörigen Druckmittelkanäle 2', 2"', 2"" in einer Perspektivansicht von der Unterseite des Aufnahmekörpers 1 gesehen, wobei die zweite Ventilreihe Y ausschließlich die Ventilaufnahmebohrungen 2 für die Auslaßventile und die erste Ventilreihe ausschließlich die Ventilaufnahmebohrungen 2 für die Einlaßventile aufnimmt. Dadurch, daß die Pumpenbohrung außerhalb den beiden Ventilreihen X, Y angeordnet ist, können die Druckmittelkanäle 2"", die jeweils eine Ventilaufnahmebohrung 2 der ersten Ventilreihe X mit einer Ventilaufnahmebohrung 2 der zweiten Ventilreihe Y verbindet als Gerad- bzw. Sackbohrungen möglichst kurz gestaltet werden, wobei auch die unmittelbar neben der ersten Ventilreihe X angeordneten Radbremsanschlüsse VR, VL, HR, HL auf kürzestem Weg an die Ventilaufnahmebohrungen 2 der ersten Ventilreihe X angeschlossen sind. Dies führt zu einem geringem Herstellaufwand, unproblematischer Entlüftung und Befüllung mit Bremsflüssigkeit als auch im Betrieb zu geringen Strömungswiderständen in den Druckmittelkanälen 2', 2"', 2"". Die Radbremsanschlüsse sind zur Montagevereinfachung für die Radbremsleitungen teilweise parallel zur Motoraufnahmebohrung 4 angeordnet, so daß zwei von vier Radbremsanschlüssen neben einem an der Oberseite des Aufnahmekörpers 1 aus der Motoraufnahmebohrung 4 hervorstehenden Motorengehäuse in den Aufnahmekörper 1 einmünden.

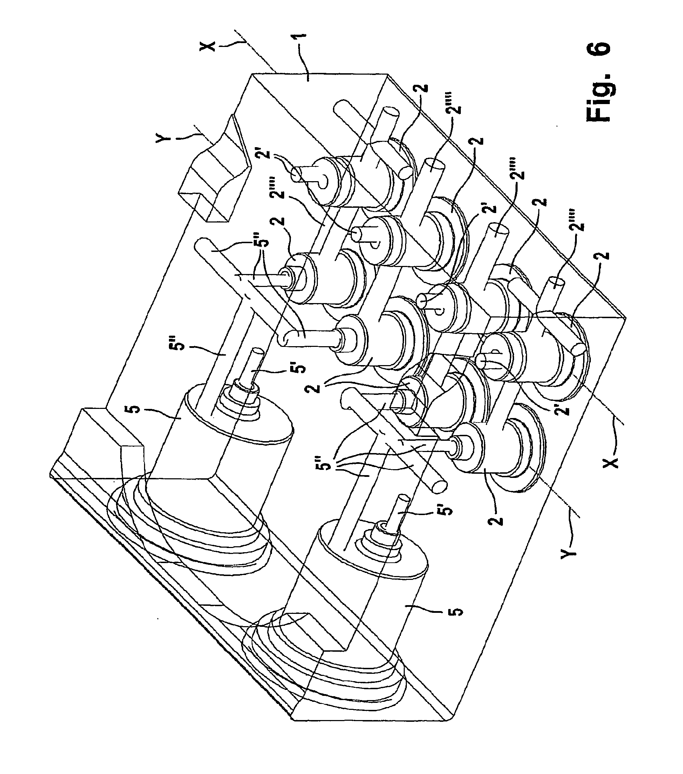

Die Figur 6 zeigt in baulicher Erweiterung der Figur 5 die von der zweiten Ventilreihe Y zu den Niederdruckspeicherbohrungen 5 führenden Rücklaufkanäle 5" als auch die äußerst kurzen, zur Pumpenbohrung 3 führenden Pumpensaugkanäle 5' für beide Brems- bzw. Pumpenkreise. Die Pumpensaugkanäle 5' sind an den Niederdruckspeicherbohrungen 5 angeschlossen, wobei in jeden Pumpensaugkanal 5' jeweils ein Pumpensaugventil 10 eingesetzt ist. Durch die unmittelbare Nähe der Pumpensaugkanäle 5' zur Pumpenbohrung 3 ergibt sich ein kurzer, strömungsgünstiger Strömungsweg, so daß die Pumpenansaugverluste sehr gering sind.

### Bezugszeichenliste

- 1: Aufnahmekörper
- 2: Ventilaufnahmebohrung
- 2': Druckmittelkanal
- 2"': Druckmittelkanal
- 2"": Druckmittelkanal
- 3: Pumpenbohrung
- 3': Druckmittelkanal
- 4: Motoraufnahmebohrung
- 4': -
- 5: Niederdruckspeicherbohrung
- 5': Pumpensaugkanal
- 5": Rücklaufkanal
- 6: Geräuschdämpfungskammer
- 7: -
- 8: Durchgangsbohrung
- 9: Blende
- 10: Pumpensaugventil
- X: Erste Ventilreihe
- Y: Zweite Ventilreihe
- THZ: Bremsdruckgeberanschluß
- R1, R2, R3, R4: Radbremsanschluß

## Patentansprüche

1. Hydraulikaggregat für eine schlupfgeregelte Bremsanlage, mit einem Aufnahmekörper (1), der in mehreren Ventilaufnahmebohrungen (2) einer ersten und zweiten Ventilreihe (X, Y) Ein- und Auslaßventile aufnimmt, mit einer außerhalb zu den beiden Ventilreihen (X, Y) im Aufnahmekörper (1) angeordneten Pumpenbohrung (3), die quer zur Einmündungsrichtung der Ventilaufnahmebohrungen (2) in den Aufnahmekörper (1) gerichtet ist, mit zwei an der Pumpenbohrung (3) angeschlossenen, hohlzylinderförmigen Geräuschdämpfungskammern (6), die mit zwei in den Aufnahmekörper (1) einmündenden Bremsdruckgeberanschlüssen (THZ) hydraulisch verbunden sind, wobei die beiden Geräuschdämpfungskammern (6) zwischen der Pumpenbohrung (3) und den Bremsdruckgeberanschlüssen (THZ) angeordnet sind, mit mehreren die Ventilaufnahmebohrungen (2) und Pumpenbohrung (3) verbindenden Druckmittelkanäle, die eine hydraulische Verbindung zwischen den in den Aufnahmekörper (1) einmündenden Bremsdruckgeberanschlüssen (THZ) und den Radbremsanschlüssen (R1-R4) herzustellen vermögen, wobei sich jeweils ein als Sackbohrung ausgeführter Druckmittelkanal (3') von einem quer zu den Ventilaufnahmebohrungen (2) angeordneter Bremsdruckgeberanschluß (THZ) durch jeweils eine der beiden Geräuschdämpfungskammern (6) bis in die Pumpenbohrung (3) erstreckt, sowie mit einer Durchgangsbohrung (8) für einen elektrischen Stecker zur Kontaktierung eines Elektromotors mit einem am Aufnahmekörper (1) angeordneten Ventilsteuergerät, das die Steuerelektronik zum Antrieb des Elektromotors beinhaltet, **dadurch gekennzeichnet, daß** die beiden Geräuschdämpfungskammern (6) achsparallel zur Pumpenbohrung (3) angeordnet sind, und daß die Durchgangsbohrung (8) zwischen den beiden Geräuschdämpfungskammern (6) angeordnet ist.

2. Hydraulikaggregat nach Anspruch 1, **dadurch gekennzeichnet, daß** quer zur Sackbohrung ein von der Ventilaufnahmebohrung (2), die das Einlassventil aufnimmt, kommender Druckmittelkanal (2') in die Sackbohrung einmündet.

3. Hydraulikaggregat nach Anspruch 2, **dadurch gekennzeichnet, daß** in die Sackbohrung eine Blende (9) eingesetzt ist, die zwischen der Geräuschdämpfungskammer (6) und der Einmündungsstelle des Druckmittelkanals (2') in der Sackbohrung befestigt ist.

4. Hydraulikaggregat nach Anspruch 3, **dadurch gekennzeichnet, daß** der Durchmesser der Geräuschdämpfungskammer (6) derart groß gewählt ist, daß die Blende (9) durch die Geräuschdämpfungskammer (6) hindurch in die Sackbohrung eingeführt ist.

5. Hydraulikaggregat nach einem der vorhergehenden Ansprüche, **dadurch gekennzeichnet, daß** die Pumpenbohrung (3) beiderseits der Motoraufnahmebohrung (4) einen Achsenversatz aufweist.

6. Hydraulikaggregat nach Anspruch 1, **dadurch gekennzeichnet, daß** die zweite Ventilreihe (Y) ausschließlich die Ventilaufnahmebohrungen (2) für die Auslaßventile aufweist, die zwischen der Pumpenbohrung (3) und der ersten Ventilreihe (X), welche ausschließlich die Ventilaufnahmebohrungen (2) für die Einlaßventile aufnimmt, gelegen ist, so daß die zweite Ventilreihe (Y) unmittelbar neben der Pumpenbohrung (3) angeordnet ist.

7. Hydraulikaggregat nach Anspruch 1, **dadurch gekennzeichnet, daß** die Radbremsanschlüsse teilweise parallel zu einer quer zur Pumpenbohrung (3) angeordneten Motoraufnahmebohrung (4) angeordnet sind, wobei die Radbremsanschlüsse neben einem an der Oberseite des Aufnahmekörpers (1) aus der Motoraufnahmebohrung (4) hervorstehenden Motorengehäuse in den Aufnahmekörper (1) einmünden.

8. Hydraulikaggregat nach Anspruch 7, **dadurch gekennzeichnet, daß** auf einer dem Motorengehäuse gegenüberliegenden Gehäuseseite des Aufnahmekörpers (1) ein Ventilsteuergerät angebracht ist, das gleichzeitig die Steuerelektronik zum Antrieb eines im Motorengehäuse integrierten Elektromotors für eine in der Pumpenbohrung (3) eingesetzte Radialkolbenpumpe beinhaltet, wobei ein elektrischer Stecker des Elektromotors durch eine zwischen den beiden Ventilreihe (X, Y) gelegene Durchgangsbohrung (8) ragt und das Ventilsteuergerät kontaktiert.

9. Hydraulikaggregat nach einem der vorangegangenen Ansprüche, **dadurch gekennzeichnet, daß** die Geräuschdämpfungskammer (6) zwischen den beiden Ventilreihen (X, Y) und einem in einer Motoraufnahmebohrung (4) eingesetzten Elektromotor im Aufnahmekörper (1) angeordnet ist.

## Claims

1. Hydraulic unit for a slip-controlled brake system, with an accommodating member (1) accommodating inlet and outlet valves in several valve accommodating bores (2) of a first and second valve row (X, Y), with a pump bore (3) arranged outside the two valve rows (X, Y) in the accommodating member (1), the pump bore being aligned transversely to the direction in which the valve accommodating bores (2) open into the accommodating member (1), with two hollow-cylindrical noise damping chambers (6) connected to the pump bore (3) and having a hydraulic connection with two brake pressure generator connections (THZ) that open into the accommodating member (1), and the two noise damping chambers (6) being arranged between the pump bore (3) and the brake pressure generator connections (THZ), with several pressure fluid channels connecting the valve accommodating bores (2) and the pump bore (3) and being able to establish a hydraulic connection between the brake pressure generator connections (THZ) opening into the accommodating member (1) and the wheel brake connections (R1-R4), with each one pressure fluid channel (3') configured as a blind-end bore extending from a brake pressure generator connection (THZ) that is arranged transversely to the valve accommodating bores (2) through respectively one of the two noise damping chambers (6) until into the pump bore (3), and with a through-bore (8) for an electric plug for providing contact between an electric motor and a valve control device, which is arranged at the accommodating member (1) and contains the control electronics for driving the electric motor,
**characterized in that** the two noise damping chambers (6) are arranged in parallel to the axis of the pump bore (3), and **in that** the through-bore (8) is arranged between the two noise damping chambers (6).

2. Hydraulic unit as claimed in claim 1,
**characterized in that** transversely to the blind-end bore, a pressure fluid channel (2') that extends from the valve accommodating bore (2) accommodating the inlet valve opens into the blind-end bore.

3. Hydraulic unit as claimed in claim 2,
**characterized in that** an orifice (9) is inserted into the blind-end bore, which is attached in the blind-end bore between the noise damping chamber (6) and the port of the pressure fluid channel (2').

4. Hydraulic unit as claimed in claim 3,
**characterized in that** the diameter of the noise damping chamber (6) is selected to be so large that the orifice (9) is introduced through the noise damping chamber (6) into the blind-end bore.

5. Hydraulic unit as claimed in any one of the preceding claims,
**characterized in that** the pump bore (3) has an axle offset on both sides of the motor accommodating bore (4).

6. Hydraulic unit as claimed in claim 1,
**characterized in that** the second valve row (Y) includes exclusively the valve accommodating bores (2) for the outlet valves and is disposed between the pump bore (3) and the first valve row (X), which exclusively receives the valve accommodating bores (2) for the inlet valves so that the second valve row (Y) is arranged directly adjacent to the pump bore (3).

7. Hydraulic unit as claimed in claim 1,
**characterized in that** the wheel brake connections are arranged partly in parallel to a motor accommodating bore (4) arranged transversely to the pump bore (3), and the wheel brake connections open into the accommodating member (1) adjacent to a motor housing that projects on the top side of the accommodating member (1) from the motor accommodating bore (4).

8. Hydraulic unit as claimed in claim 7,
**characterized in that** on a housing side of the accommodating member (1) opposed to the motor housing, a valve control device is mounted which additionally comprises the control electronics for driving an electric motor integrated in the motor housing for used in a radial piston pump inserted into the pump bore (3), and an electric plug of the electric motor projects through a through-bore (8) disposed between the two valve rows (X, Y) and contacts the valve control device.

9. Hydraulic unit as claimed in any one of the preceding claims,
**characterized in that** the noise damping chamber (6) is arranged in the accommodating member (1) between the two valve rows (X, Y) and an electric motor mounted in a motor accommodating bore (4).

## Revendications

1. Groupe hydraulique pour un système de freinage à régulation du patinage, comportant un corps de réception (1) qui reçoit des soupapes d'admission et soupapes d'échappement dans plusieurs alésages de réception de soupape (2) d'une première rangée et d'une seconde rangée de soupapes (X, Y), comportant un alésage de pompe (3) disposé dans le corps de réception (1) à l'extérieur des deux rangées de soupapes (X, Y), lequel est orienté transversalement à la direction d'embouchure des alésages de réception de soupape (2) dans le corps de réception (1), comportant deux chambres d'amortissement de bruit (6) en forme de cylindre creux, raccordées à l'alésage de pompe (3), lesquelles sont reliées hydrauliquement à deux raccords de transmetteur de pression de freinage (THZ) débouchant dans le corps de réception (1), les deux chambres d'amortissement de bruit (6) étant disposées entre l'alésage de pompe (3) et les raccords de transmetteur de pression de freinage (THZ), comportant plusieurs canaux de fluide sous pression reliant les alésages de réception de soupape (2) et l'alésage de pompe (3), lesquels permettent de réaliser une liaison hydraulique entre les raccords de transmetteur de pression de freinage (THZ) débouchant dans le corps de réception (1) et les raccords de frein de roue (R1-R4), un canal de fluide sous pression (3'), réalisé sous la forme d'un trou borgne, s'étendant chaque fois d'un raccord de transmetteur de pression de freinage (THZ) disposé transversalement aux alésages de réception de soupape (2), à travers l'une des deux chambres d'amortissement de bruit (6), jusqu'à l'alésage de pompe (3), et comportant aussi un trou débouchant (8) pour un connecteur électrique pour la mise en contact d'un moteur électrique avec un appareil de commande de soupape disposé sur le corps de réception (1), lequel appareil contient l'électronique de commande pour l'entraînement du moteur électrique, **caractérisé en ce que** les deux chambres d'amortissement de bruit (6) sont disposées avec leur axe parallèle à l'alésage de pompe (3), et **en ce que** le trou débouchant (8) est disposé entre les deux chambres d'amortissement de bruit (6).

2. Groupe hydraulique selon la revendication 1, **caractérisé en ce qu'**un canal de fluide sous pression (2'), provenant de l'alésage de réception de soupape (2) qui reçoit la soupape d'admission, débouche dans le trou borgne transversalement à celui-ci.

3. Groupe hydraulique selon la revendication 2, **caractérisé en ce que** dans le trou borgne est inséré un diaphragme (9) qui est fixé entre la chambre d'amortissement de bruit (6) et le point d'embouchure du canal de fluide sous pression (2') dans le trou borgne.

4. Groupe hydraulique selon la revendication 3, **caractérisé en ce que** le diamètre de la chambre d'amortissement de bruit (6) est choisi suffisamment grand pour que le diaphragme (9) soit introduit dans le trou borgne à travers la chambre d'amortissement de bruit (6).

5. Groupe hydraulique selon l'une des revendications précédentes, **caractérisé en ce que** l'alésage de pompe (3) présente un décalage axial des deux côtés de l'alésage de réception de moteur (4).

6. Groupe hydraulique selon la revendication 1, **caractérisé en ce que** la seconde rangée de soupapes (Y) présente exclusivement les alésages de réception de soupape (2) pour les soupapes d'échappement, laquelle est située entre l'alésage de pompe (3) et la première rangée de soupapes (X) qui reçoit exclusivement les alésages de réception de soupape (2) pour les soupapes d'admission, ce qui fait que la seconde rangée de soupapes (Y) est disposée directement à côté de l'alésage de pompe (3).

7. Groupe hydraulique selon la revendication 1, **caractérisé en ce que** les raccords de frein de roue sont disposés en partie parallèlement à un alésage de réception de moteur (4) disposé transversalement à l'alésage de pompe (3), les raccords de frein de roue débouchant dans le corps de réception (1) à côté d'un carter de moteur dépassant de l'alésage de réception de moteur (4) sur la face supérieure du corps de réception (1).

8. Groupe hydraulique selon la revendication 7, **caractérisé en ce que** sur une face de carter, opposée au carter de moteur, du corps de réception (1), est placé un appareil de commande de soupape qui contient en même temps l'électronique de commande pour l'entraînement d'un moteur électrique intégré dans le carter de moteur, pour une pompe à pistons radiaux insérée dans l'alésage de pompe (3), un connecteur électrique du moteur électrique traversant un trou débouchant (8) situé entre les deux rangées de soupapes (X, Y) et étant mis en contact avec l'appareil de commande de soupape.

9. Groupe hydraulique selon l'une des revendications précédentes, **caractérisé en ce que** la chambre d'amortissement de bruit (6) est disposée dans le corps de réception (1), entre les deux rangées de soupapes (X, Y) et un moteur électrique inséré dans un alésage de réception de moteur (4).
